# EUROPÄISCHE PATENTSCHRIFT

(11) **EP 0 952 292 B1**
(45) Veröffentlichungstag und Bekanntmachung des Hinweises auf die Patenterteilung: **30.11.2005**
(21) Anmeldenummer: 99107913.8
(22) Anmeldetag: 21.04.1999
(51) Int. Cl.: E05F 15/14

(54) **Schliessvorrichtung, insbesondere für automatisch verschliessbare Fahrzeugtüren**
Closing device, especially for automatically closing vehicle doors
Dispositif de fermeture, en particulier pour portes de véhicules se fermant automatiquement

(30) Priorität: 23.04.1998 DE 19818295
(43) Veröffentlichungstag der Anmeldung: 27.10.1999
(73) Patentinhaber: Delphi Technologies, Inc., Troy, MI 48007 (US)
(72) Erfinder: Büscher, Hans-Joachim, 40476 Düsseldorf (DE); Schlien, Rüdiger, 69126 Heidelberg (DE)
(74) Vertreter: Manitz, Finsterwald & Partner GbR

(56) Entgegenhaltungen:
- US-A- 5 323 570

## Beschreibung

Die vorliegende Erfindung betrifft eine Schließvorrichtung, insbesondere für automatisch verschließbare Fahrzeugtüren, mit einem an dem Schließobjekt angreifenden Zugmittel und einer motorisch antreibbaren Wickeltrommel, auf welche das Zugmittel aufwickelbar ist und deren Außenkontur im Wickelbereich des Zugmittels in Umfangsrichtung betrachtet derart ausgebildet ist, daß der Wickelradius, also der Abstand der Trommelmantelfläche von der Trommeldrehachse, zumindest in dem in der Endphase der Schließbewegung wirksamen Mantelabschnitt kleiner ist als in dem in der vorhergehenden Schließphase wirksamen Mantelabschnitt. Eine derartige Schlieβvorrichtung ist aus US-A- 5 323 579 bekannt.

Bei automatisch verschließbaren Fahrzeugtüren darf die Schließgeschwindigkeit der Türe aus Sicherheitsgründen in der Endphase des Schließvorganges einen festgelegten Wert nicht überschreiten. Um dennoch ein Schließen der Türe in kurzer Zeit zu ermöglichen, wird die Schließgeschwindigkeit in der Endphase ausgehend von einer vorhergehenden hohen Schließgeschwindigkeit auf die geforderte Geschwindigkeit reduziert. Dies wird bei den Schließvorrichtungen der eingangs genannten Art durch eine Außenkontur der Wickeltrommel erreicht, durch die der Wickelradius in der Endphase der Schließbewegung reduziert ist. Dadurch reduziert sich die Schließgeschwindigkeit bei gleichbleibender Drehgeschwindigkeit der Wickeltrommel in der gewünschten Weise.

Ein Nachteil der Ausgestaltung der Wickeltrommel mit reduziertem Wikkelradius besteht darin, daß sich der Biegeradius des Zugmittels in diesem Bereich entsprechend reduziert. Durch den reduzierten Biegeradius wird die Lebensdauer des Zugmittels beeinträchtigt, zumal in der Endphase des Schließvorganges die Zugbelastung des Zugmittels maximal ist. In der Endphase muß nämlich eine ausreichende Schließkraft für die Türe vorliegen, die sich aus den Türdichtungskräften, den Maßen und dem Gewicht der Türe, der Betätigungskraft des Türschlosses und den mechanisch zu betätigenden elektrischen Türkontakten ergibt. Die Lebensdauer des Zugmittels wird dadurch zum bestimmenden Faktor für die Lebensdauer der Schließvorrichtung insgesamt.

Der Erfindung liegt die Aufgabe zugrunde, die Dauerhaltbarkeit des Zugmittels und damit der Schließvorrichtung zu erhöhen

Diese Aufgabe wird durch die Merkmale des Anspruchs 1 gelöst.

Durch die erfindungsgemäße Ausgestaltung der Außenkontur der Wickeltrommel kann die Biegebelastung des Zugmittels in der kritischen Endphase des Schließvorganges deutlich verringert und dessen Lebensdauer entsprechend erhöht werden, da der Biegeradius gegenüber bekannten Schließvorrichtungen vergrößert werden kann.

Da der in der Schließphase wirksame Mantelabschnitt verhältnismäßig klein ist, insbesondere nur einem Drehwinkel von etwa 60° entspricht, werden Schließgeschwindigkeit und Schließkraft durch die Vergrößerung des Krümmungsradius nur unwesentlich verändert.

Der Grundgedanke der Erfindung besteht also darin, den Krümmungsradius des für die Endphase des Schließvorganges maßgeblichen Mantelabschnittes größer zu wählen als den Wickelradius, indem der Mittelpunkt der Mantelkrümmung in geeigneter Weise von der Drehachse der Wickeltrommel weg verlegt wird. Im Gegensatz zu den bekannten Schließvorrichtungen fällt bei der erfindungsgemäßen Vorrichtung der Krümmungsmittelpunkt also nicht mit der Drehachse der Wickeltrommel zusammen. Dadurch kann trotz kleinem Wickelradius ein großer Biegeradius des Zugmittels erreicht werden, also eine geringe Schließgeschwindigkeit bei gleichzeitig verringerter Zugbelastung des Zugmittels.

Nach einer bevorzugten Ausgestaltung der Erfindung ist der Krümmungsradius des in der Schließphase wirksamen Mantelabschnitts der Wickeltrommel annähernd mindestens doppelt so groß wie der Wickelradius. Bevorzugt ist der Krümmungsradius in diesem Mantelabschnitt annähernd eineinhalb mal so groß wie der Wickelradius. Durch diese Wahl wird die Lebensdauer des Zugmittels soweit erhöht, daß sie mit den übrigen Bauteilen der Schließvorrichtung in etwa übereinstimmt.

Nach einer weiteren bevorzugten Ausgestaltung der Erfindung ist der Krümmungsradius des in der Schließphase wirksamen Mantelabschnitts über diesen Mantelabschnitt konstant. Dies gewährleistet während der gesamten Endphase geringe Biegekräfte bei gleichzeitig einfacher Herstellbarkeit der Trommel, insbesondere wenn nach einer weiteren Ausgestaltung der Erfindung der Krümmungsradius über die gesamte wirksame Mantelfläche konstant ist.

Nach einer weiteren bevorzugten Ausgestaltung der Erfindung ist der Krümmungsradius der Wickeltrommel in dem in der Schließphase wirksamen Mantelabschnitts größer als außerhalb dieses Mantelabschnitts, insbesondere größer als in der Anfangsposition. Gerade in der kritischen Endphase mit der maximalen Zugbelastung kann die Biegebelastung dadurch besonders klein gehalten werden.

Als Zugmittel kann insbesondere ein Zugseil dienen, welches vorteilhafterweise in einer Nut der Wickeltrommel geführt ist.

Zwei Ausführungsbeispiele der Erfindung sind in der Zeichnung dargestellt und werden nachfolgend beschrieben. Es zeigen, jeweils in schematischer Darstellung,
- Fig. 1: die Wickeltrommelkontur einer ersten Variante der Erfindung,
- Fig. 2: die Wickeltrommelkontur einer zweiten Variante der Erfindung und
- Fig. 3: eine Gegenüberstellung der Wickeltrommelkonturen der Varianten von Fig. 1 und Fig. 2 mit der Wickeltrommelkontur einer bekannten Schließvorrichtung.

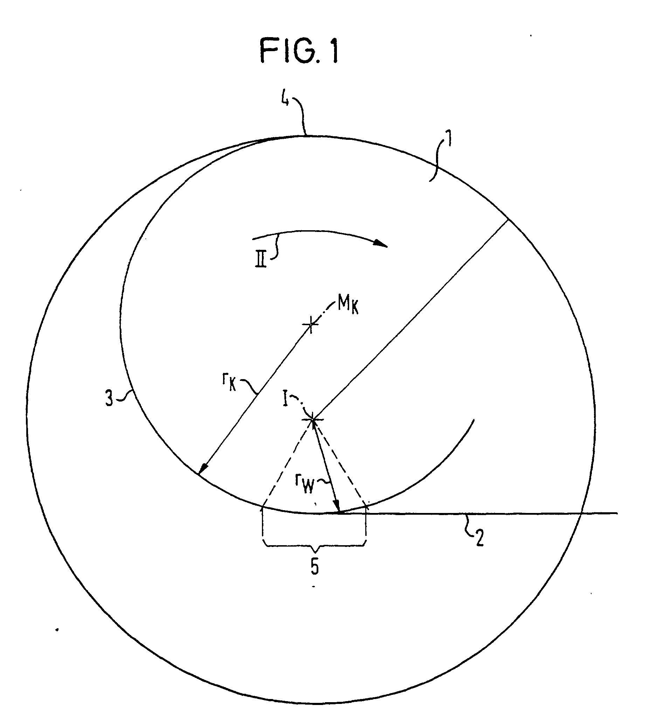

Fig. 1 zeigt eine Trommel 1 im Querschnitt. Die Trommel 1 ist um eine Achse I drehbar gelagert und motorisch antreibbar. Dabei ist auf die Trommel 1 ein Zugseil 2 auf- und abwickelbar. Die Aufwickelrichtung ist mit Pfeil II gekennzeichnet. Die Mantelfläche 3 der Trommel 1 im Aufwikkelbereich des Zugseils 2, bei dem es sich insbesondere um eine Nut handelt, weist eine Kontur auf, die so ausgebildet ist, daß sich der Wickelradius rw, also der Abstand zwischen Mantelfläche 3 und Drehachse I, ausgehend von einem maximalen Anfangswert an einer Mantelposition 4 auf einen gewünschten Wert in demjenigen Mantelabschnitt 5 verringert, auf welchen das Zugseil 2 in der Endphase der Schließbewegung aufgewickelt wird. Die Kontur der Mantelfläche 3 ist dabei aber so gewählt daß der Krümmungsradius r_{K} in dem insbesondere einen Drehwinkel von 60° umfassenden Mantelabschnitt 5 größer ist als der Wickelradius rw in diesem Bereich. Der Krümmungsmittelpunkt M_{K} liegt also nicht auf der Drehachse I der Wickeltrommel 1, sondern von der Mantelfläche 3 weiter entfernt.

In dem dargestellten Beispiel in Fig. 1 beträgt der Krümmungsradius r_{K} im Mantelabschnitt 5 konstant 60 mm. Wie dargestellt, kann dieser Wert bereits vor dem Mantelabschnitt 5 und insbesondere über die gesamte wirksame Mantelfläche 3 vorliegen. Dementsprechend nimmt der Wickelradius rw im Mantelabschnitt 5 von einem in der Mitte des Abschnitts 5 erreichten Minimalwert, im dargestellten Beispiel 30 mm, wieder zu. Die dadurch bedingte Vergrößerung des Wickelradius rw gegenüber dem Wickelradius bei bekannten Schließvorrichtungen ist so gering, daß dies auf die Schließkraft und Schließgeschwindigkeit keine nachteilige Auswirkung hat.

Bei dem Ausführungsbeispiel von Fig. 1 beträgt der Krümmungsradius in der Mantelfläche 3 also durchgängig 60 mm. Entsprechend groß ist der Biegeradius des aufgewickelten Zugseils 2, dessen Biegebelastung insbesondere im Mantelbereich 5 entsprechend geringer ist als bei herkömmlichen Schließvorrichtungen dieser Art.

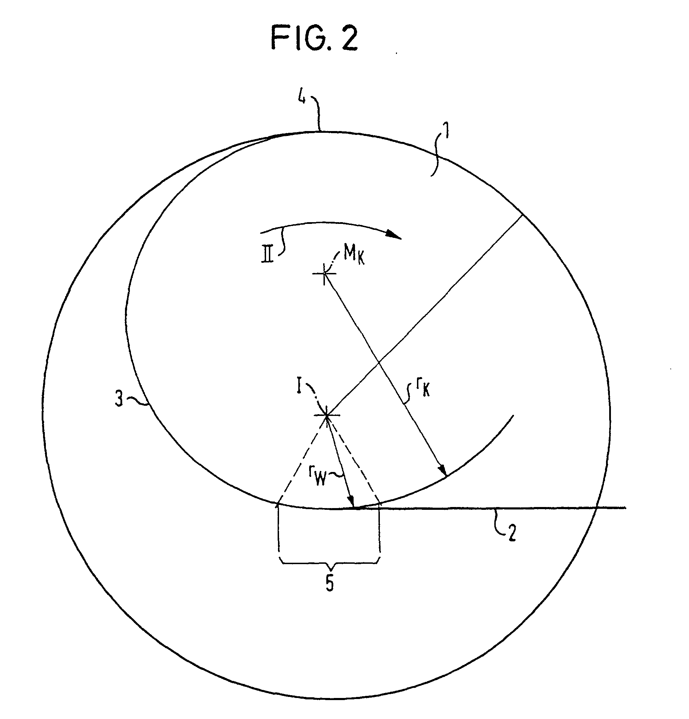

Das in Fig. 2 dargestellte Ausführungsbeispiel unterscheidet sich von dem Ausführungsbeispiel von Fig. 1 dadurch, daß sich hier der Krümmungsradius r_{K} über die Mantelfläche 3 der Wickeltrommel 1 verändert. Ausgehend von einem mit dem Wert des Ausführungsbeispiels von Fig. 1 übereinstimmenden Wert an der Mantelposition 4 nimmt der Krümmungsradius auf einen Wert von 75 mm im Bereich 5 der Mantelfläche 3 zu. Das heißt, der Krümmungsmittelpunkt M_{K} entfernt sich zunehmend von der Drehachse I der Wickeltrommel 1. Ab einer gewissen Stelle der Mantelfläche 3 kann der Krümmungsradius r_{K} konstant bleiben, insbesondere über den Abschnitt 5. Durch diese Ausgestaltung kann der Krümmungsradius r_{K} im kritischen Bereich 5 weiter vergrößert und die Biegebelastung des Zugseils 2 weiter verringert werden.

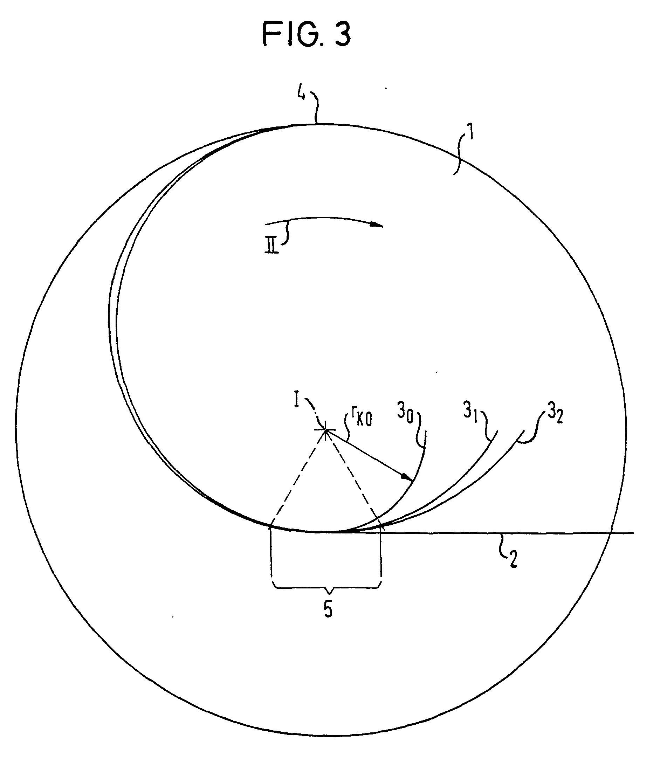

Fig. 3 zeigt eine Gegenüberstellung der Mantelkonturen der beiden in den Fig. 1 und 2 dargestellten erfindungsgemäßen Schließvorrichtungen und der Mantelkontur einer bekannten Schließvorrichtung. Die Linie 3₀ entspricht dabei der Mantelfläche der Wickeltrommel 1 einer konventionellen Schließvorrichtung, die Linie 3₁ der Mantelfläche der Variante von Fig. 1 und die Linie 3₂ der Mantelfläche der Variante von Fig. 2. Wie man sieht, ist der Krümmungsradius r_{K} der beiden Mantelflächen 3₁ und 3₂ im Abschnitt 5 deutlich größer als der Krümmungsradius r_{K} der Mantelfläche 3₀ in diesem Bereich. Die Wickelradien rw unterscheiden sich in diesem Bereich dagegen nur wenig, und damit auch Schließgeschwindigkeit und Schließkraft. Durch die erfindungsgemäße Mantelkontur wird somit in einfacher Weise eine Verringerung der Biegebelastung des Zugseils 2 und damit eine Erhöhung von dessen Lebensdauer erreicht.

### Bezugszeichenliste

- 1: Wickeltrommel
- 2: Zugseil
- 3: Mantelfläche
- 4: Anfangsposition
- 5: Abschnitt von 3

- I: Drehachse von 1
- II: Drehrichtungspfeil
- r_{K}: Krümmungsradius
- r_{W}: Wickelradius
- M_{K}: Krümmungsmittelpunkt

## Patentansprüche

1. Schließvorrichtung, insbesondere für automatisch verschließbare Fahrzeugtüren, mit einem an dem Schließobjekt angreifenden Zugmittel (2) und einer motorisch antreibbaren Wickeltrommel (1), auf welche das Zugmittel (2) aufwickelbar ist und deren Außenkontur (3) im Wickelbereich des Zugmittels (2) in Umfangsrichtung betrachtet derart ausgebildet ist, daß der Wickelradius (rw), also der Abstand der Trommelmantelfläche (3) von der Trommeldrehachse (I), zumindest in dem in der Endphase der Schließbewegung wirksamen Mantelabschnitt (5) kleiner ist als in dem in der vorhergehenden Schließphase wirksamen Mantelabschnitt,
**dadurch gekennzeichnet,**
**daß** der in der Endphase der Schließbewegung wirksame Mantelabschnitt (5) der Wickeltrommel (1) eine Krümmung mit einem Krümmungsradius (r_{K}) aufweist, welcher größer ist als der Wickelradius (r_{W}) in diesem Bereich, indem der Mittelpunkt (M_{K}) der Mantelkrümmung in geeigneter Weise von der Drehachse (I) der Wickeltrommel (1) weg verlegt ist.

2. Schließvorrichtung nach Anspruch 1,
**dadurch gekennzeichnet,**
**daß** der Krümmungsradius (r_{K}) des in der Schließphase wirksamen Mantelabschnitts (5) annähernd mindestens doppelt so groß ist wie der Wickelradius (r_{W}) in diesem Bereich.

3. Schließvorrichtung nach Anspruch 2,
**dadurch gekennzeichnet ,**
**daß** der Krümmungsradius (r_{K}) des in der Schließphase wirksamen Mantelabschnitts (5) etwa eineinhalb mal so groß ist wie der Wickelradius (rw).

4. Schließvorrichtung nach einem der vorhergehenden Ansprüche,
**dadurch gekennzeichnet,**
**daß** der Krümmungsradius (r_{K}) in dem in der Schließphase wirksamen Mantelabschnitt (5) konstant ist.

5. Schließvorrichtung nach Anspruch 4,
**dadurch gekennzeichnet,**
**daß** der Krümmungsradius (r_{K}) über die gesamte wirksame Mantelfläche (3) konstant ist.

6. Schließvorrichtung nach einem der Ansprüche 1 bis 4,
**dadurch gekennzeichnet,**
**daß** der Krümmungsradius (r_{K}) der Wickeltrommel (1) in dem in der Schließphase wirksamen Mantelabschnitt (5) größer ist als außerhalb dieses Mantelabschnitts (5), insbesondere größer als in der Anfangsposition (4).

7. Schließvorrichtung nach einem der vorhergehenden Ansprüche,
**dadurch gekennzeichnet,**
**daß** als Zugmittel ein Zugseil (2) dient.

8. Schließvorrichtung nach Anspruch 7,
**dadurch gekennzeichnet ,**
**daß** das Zugseil (2) in einer Nut der Wickeltrommel (1) geführt ist.

## Claims

1. Closing device, in particular for automatically closable vehicle doors, comprising a traction means (2) which engages at the closing object and a motor driveable winding drum (1) onto which the traction means (2) can be wound and of which the outer contour (3) is formed in the winding region of the traction means (2), when viewed in the peripheral direction, such that the winding radius (rw), that is, the distance of the drum jacket surface (3) from the drum axis of rotation (I), is smaller at least in the jacket section (5) effective in the final phase of the closing movement than in the jacket section active in the preceding closing phase,
**characterized in that**
the jacket section (5) of the winding drum (1) effective in the final phase of the closing movement has a curvature with a radius of curvature (r_{K}) which is larger than the winding radius (r_{w}) in this region **in that** the center (M_{K}) of the jacket curvature is placed away from the axis of rotation (I) of the winding drum (1) in a suitable manner.

2. Closing device in accordance with claim 1, **characterized in that** the radius of curvature (r_{K}) of the jacket section (5) effective in the closing phase is approximately at least twice as large as the winding radius (r_{w}) in this region.

3. Closing device in accordance with claim 2, **characterized in that** the radius of curvature (r_{K}) of the jacket section (5) effective in the closing phase is approximately one and one half times as large as the winding radius (r_{w}).

4. Closing device in accordance with any one of the preceding claims, **characterized in that** the radius of curvature (r_{K}) in the jacket section (5) effective in the closing phase is constant.

5. Closing device in accordance with claim 4, **characterized in that** the radius of curvature (r_{K}) is constant over the entire effective jacket surface (3).

6. Closing device in accordance with any one of the claims 1 to 4, **characterized in that** the radius of curvature (r_{K}) of the winding drum (1) is larger in the jacket section (5) effective in the closing phase than outside this jacket section (5), is in particular larger than in the initial position (4).

7. Closing device in accordance with any one of the preceding claims, **characterized in that** a traction cable (2) serves as the traction means.

8. Closing device in accordance with claim 7, **characterized in that** the traction cable (2) is guided in a groove of the winding drum (1).

## Revendications

1. Dispositif de fermeture, en particulier pour portes de véhicule à fermeture automatique, comportant un moyen de traction (2) agissant sur l'objet de fermeture et un tambour d'enroulement (1) pouvant être entraîné de manière motorisée sur lequel le moyen de traction (2) peut être enroulé et dont le contour extérieur (3) est réalisé, dans la zone d'enroulement du moyen de traction (2), vu dans la direction périphérique, de manière que le rayon d'enroulement (*r*_{*w*}), c'est-à-dire la distance entre la surface d'enveloppe du tambour (3) et l'axe de rotation du tambour (I), soit inférieur, au moins dans la portion d'enveloppe (5) agissant dans la phase finale du mouvement de fermeture, à ce qu'il est dans la portion d'enveloppe agissant dans la phase de fermeture précédente,
**caractérisé**
**en ce que** la portion d'enveloppe (5), agissant dans la phase finale du mouvement de fermeture, du tambour d'enroulement (1), présente une courbure avec un rayon de courbure (rₖ) qui est supérieur au rayon d'enroulement (r_{w}) dans cette zone, du fait que le centre de courbure (Mₖ) de la courbure de l'enveloppe est éloigné de manière appropriée de l'axe de rotation (I) du tambour d'enroulement.

2. Dispositif de fermeture selon la revendication &,
**caractérisé**
**en ce que** le rayon de courbure (rₖ) de la portion d'enveloppe (5) agissant dans la phase de fermeture, est au moins approximativement, le double du rayon d'enroulement (r_{w}) dans cette zone.

3. Dispositif de fermeture selon la revendication 2,
**caractérisé**
**en ce que** le rayon de courbure (r_{K}) de la portion d'enveloppe (5) agissant dans la phase de fermeture est environ une fois et demie plus grand que le rayon d'enroulement (*r*_{*w*}).

4. Dispositif de fermeture selon l'une des revendications précédentes,
**caractérisé**
**en ce que** le rayon de courbure (r_{K}) est constant dans la portion d'enveloppe (5) agissant dans la phase de fermeture.

5. Dispositif de fermeture selon la revendication 4,
**caractérisé**
**en ce que** le rayon de courbure (r_{K}) est constant sur toute la surface d'enveloppe (3) utile.

6. Dispositif de fermeture selon l'une des revendications 1 à 4,
**caractérisé**
**en ce que** le rayon de courbure (r_{K}) du tambour d'enroulement (1) dans la portion d'enveloppe (5) agissant dans la phase de fermeture, est plus grand qu'à l'extérieur de cette portion d'enveloppe (5), en particulier plus grand que dans la position initiale (4).

7. Dispositif de fermeture selon l'une des revendications précédentes,
**caractérisé**
**en ce qu'**un câble de traction (2) sert de moyen de traction.

8. Dispositif de fermeture selon la revendication 7,
**caractérisé**
**en ce que** le câble de traction (2) est guidé dans une rainure du tambour d'enroulement (1).
